# EUROPEAN PATENT APPLICATION

(11) **EP 3 986 051 A1**
(43) Date of publication of application: **20.04.2022**
(21) Application number: 19933119.0
(22) Date of filing: 11.06.2019
(51) Int. Cl.: H04W 72/04

(54) **TERMINAL AND WIRELESS COMMUNICATION METHOD**

(71) Applicant: NTT DOCOMO, INC., Chiyoda-ku Tokyo 100-6150 (JP)
(72) Inventor: YOSHIOKA, Shohei, Tokyo 100-6150 (JP); MATSUMURA, Yuki, Tokyo 100-6150 (JP); HARADA, Hiroki, Tokyo 100-6150 (JP); NAGATA, Satoshi, Tokyo 100-6150 (JP); WANG, Lihui, Beijing 100190 (CN); HOU, Xiaolin, Beijing 100190 (CN)
(74) Representative: Hoffmann Eitle
(86) International application number: PCT/JP2019/023170
(87) International publication number: WO 2020/250322

(57) **Abstract**

An aspect of a terminal according to the present disclosure includes a receiving section that receives a control resource set for which a maximum value of at least one of a number of symbols for allocation and a number of slots for allocation is changed based on at least one of a subcarrier spacing and a frequency band, and a control section that controls reception of the control resource set.

## Description

### Technical Field

The present disclosure relates to a terminal and a radio communication method in next-generation mobile communication systems.

### Background Art

In Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (e.g., referred to as "5th generation mobile communication system (5G))," "5G+ (plus)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication system (for example, NR Rel. 16 or later versions), studies have been conducted about utilization of a frequency band or a frequency range (FR) higher than a given frequency (for example, 52.6 GHz).

The frequency band higher than the given frequency is expected to involve increased phase noise and high sensitivity to a peak-to-average power ratio (PAPR).

However, no sufficient studies have been conducted about how to perform communication control (for example, channel design, modulation control, mapping control, and so on) at frequencies higher than the given frequency.

Thus, an object of the present disclosure is to provide a terminal and a radio communication method which can appropriately perform communication even in a case where a high frequency band is used.

### Solution to Problem

A terminal according to an aspect of the present disclosure includes: a receiving section that receives a control resource set for which a maximum value of at least one of a number of symbols for allocation and a number of slots for allocation is changed based on at least one of a subcarrier spacing and a frequency band; and a control section that controls reception of the control resource set.

### Advantageous Effects of Invention

Thus, according to an aspect of the present disclosure, communication can be appropriately performed even in a case where a high frequency band is used.

### Brief Description of Drawings

FIG. 1 is a diagram to show an example of an FR;
FIG. 2 is a diagram to show an example of control resource set durations corresponding to subcarrier spacings.
FIGS. 3A to 3E are diagrams to show an example of allocation of the control resource set;
FIGS. 4A to 4E are diagrams to show another example of allocation of the control resource set;
FIGS. 5A to 5E are diagrams to show another example of allocation of the control resource set.
FIGS. 6A and 6B are diagrams to show an example of allocation of DMRSs;
FIG. 7 is a diagram to show an example of a configuration of a TCI state in units of a given time;
FIG. 8 is a diagram to show an example of a method for determining a modulation order for a plurality of durations;
FIGS. 9A to 9D are diagrams to show an example of allocation of a PDCCH (or DMRS for the PDCCH);
FIG. 10 is diagram to show an example of allocation of a control channel and a data channel;
FIG. 11 is a diagram to show an example of a schematic structure of a radio communication system according to one embodiment;
FIG. 12 is a diagram to show an example of a structure of a base station according to one embodiment;
FIG. 13 is a diagram to show an example of a structure of a user terminal according to one embodiment; and
FIG. 14 is a diagram to show an example of a hardware structure of the base station and the user terminal according to one embodiment.

### Description of Embodiments

### (FR)

For NR, utilization of a frequency band up to 52.6 GHz has been under study. For NR Rel. 16 or later versions, utilization of a frequency band above 52.6 GHz has been under study. Note that the frequency band may be rephrased as a frequency range (FR) as appropriate.

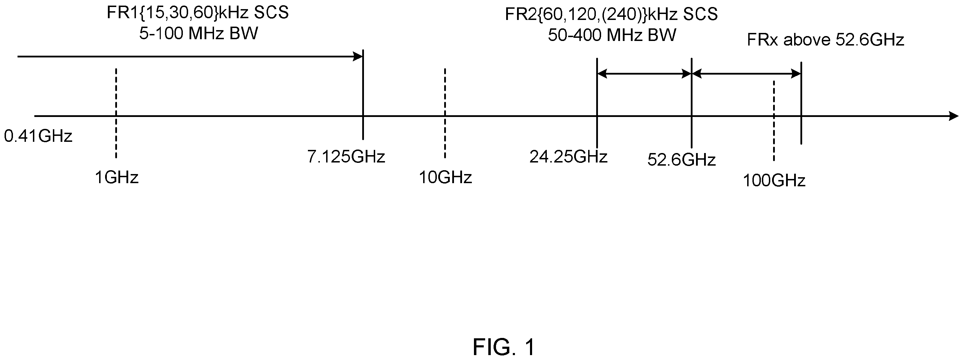

FIG. 1 is a diagram to show an example of an FR. As shown in FIG. 1, a target FR (FRx (x is an arbitrary character string) ranges, for example, from 52.6 GHz to 114.25 GHz. Note that the frequency range in NR includes FR1 from 410 MHz to 7.152 GHz and FR2 from 24.25 GHz to 52.6 GHz.

A frequency band higher than 52.6 GHz is expected to involve increased phase noise and increased propagation loss. The frequency band higher than 52.6 GHz is expected to involve high sensitivity to at least one of a peak-to-average power ratio (PAPR) and PA of non-linearity.

With the above-described matter taken into account, a configuration with a larger subcarrier spacing (for example, at least one of CP-OFDM and DFT-S-OFDM) may be conceivable for a frequency band above 52.6 GHz (or a waveform for the frequency band above 52.6 GHz).

In Rel. 15, a DL channel (for example, the PDCCH) is designed based on an OFDM waveform. However, for a frequency band above 52.6 GHz, studies of channel design based on a single carrier are expected.

The inventors of the present invention focused on a need for communication control different from existing communication control in a given frequency band (for example, a frequency band above 52.6 GHz), and came up with the present invention.

Embodiments according to the present invention will be described in detail with reference to the drawings as follows. Note that each of the following first to third aspects may be used independently or at least two of the aspects may be combined for application.

Note that the present embodiment may be applied to the existing FR1 and FR2 as well as to the above-described FRx (for example, a given frequency range above 52.6 GHz).

### (First Aspect)

In a first aspect, resource allocation for downlink channel will be described. Note that as the downlink channel, a downlink control channel (for example, the PDCCH) will be described by way of example but that the applicable downlink channel is not limited to the PDCCH but may be another downlink channel (for example, a PDSCH or the like). The first aspect may be applied to an uplink channel (for example, a PUCCH, a PUSCH, or the like) as well as to the downlink channel.

Allocations of a control resource set (controlResourceSet (CORESET)) in a time domain direction, a frequency domain direction, and a spatial domain direction, the CORESET being mapped with a PDCCH, will each be described below. The allocation directions in the respective domains may be employed independently or at least two of the allocation directions may be employed in combination.

### <Time Domain>

A time domain resource allocation (TDRA) duration for a control resource set may be determined based on at least one of a unit shorter than a slot (for example, a sub-slot level or a half-slot level) and a unit of given slots (for example, x-slot level (X ≥ 1)). The slot may be constituted of a given number of symbols.

For example, for a normal cyclic prefix (NCP), one slot may be constituted of 14 symbols, and for an extended cyclic prefix (ECP), one slot may be constituted of 12 symbols. Of course, the number of symbols constituting the slot is not limited to these.

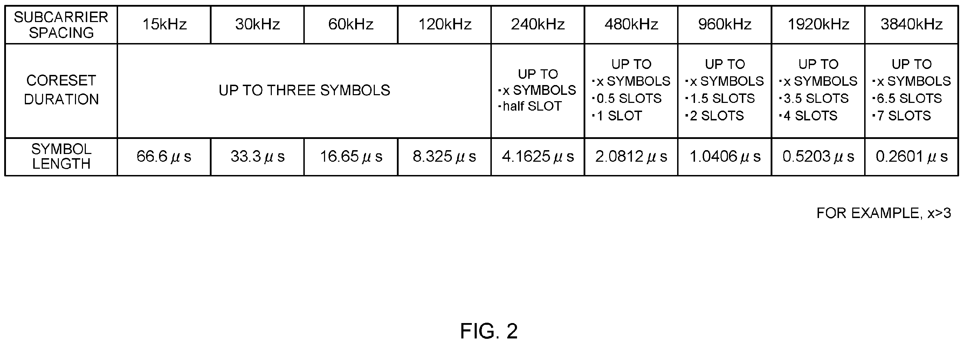

FIG. 2 is a diagram to show an example of control resource set durations (CORESET Durations) for respective subcarrier spacings. FIG. 2 shows 15 kHz, 30 kHz, 60 kHz, 120 kHz, 240 kHz, 480 kHz, 960 kHz, 1920 kHz, and 3840 kHz as examples of subcarrier spacings. However, the durations may be defined for other subcarrier spacings. Note that the numerical values shown in FIG. 2 are illustrative and that no such limitation is intended.

For example, up to a given subcarrier spacing, the maximum value of the control resource set duration (or a region to which the control resource set is allocated) may be a first value. In this regard, in a case where the subcarrier spacing is 120 kHz or lower (15 kHz, 30 kHz, 60 kHz, or 120 kHz), the first value may be 3 symbols. In other words, in a case where the subcarrier spacing is equal to or less than 120 kHz, an allocation region for the control resource set may be configured to 3 symbols or less (up to 3 symbols).

On the other hand, in a case where the subcarrier spacing is greater than a given value (for example, 120 kHz), the maximum value of the control resource set duration may be a second value greater than the first value. For example, the second value may be more than three symbols (for example, a subslot) or at least one of a half slot, a slot, and a plurality of slots. In other words, in a case where the subcarrier spacing is greater than 120 kHz, the allocation region for the control resource set may be configured to at least one of x symbols or less (for example, x > 3), a half slot or less, one slot or less, or a plurality of slots or less.

In a case where the subcarrier spacing is 120 kHz or less, the maximum value of the control resource set duration may be configured in common. In a case where the subcarrier spacing is greater than 120 kHz, the maximum value of the control resource set duration may be configured separately for each subcarrier spacing (or each of some subcarrier spacings). For example, the maximum number of symbols or slots to which the control resource set can be allocated may be configured to increase consistently with the subcarrier spacing.

Thus, for a high frequency band with a large difference in subcarrier spacing (for example, a frequency band above 52.6 GHz), the allocation region for the control resource set (or the PDCCH) can be flexibly configured according to the subcarrier spacing (or the symbol length).

With a given subcarrier spacing, the PDCCH (or the control resource set) is expected to be used in more than one slots. In such a case, the same time domain resource allocation of the PDCCH may be configured for a plurality of slots (or different slots). Alternatively, the time domain resource allocation of the PDCCH may be configured separately (for example, differently) for a plurality of slots.

The time domain resource allocation of the PDCCH (or the control resource set) may be configured consecutively or inconsecutively in a slot. The time domain resource allocation of the PDCCH (or the control resource set) may be configured consecutively or inconsecutively in different slots (for example, cross slots).

The control resource set may be allocated across the boundary between given time units (or may cross the boundary) (transmission method 1). The given time unit may be a slot. Alternatively, the PDCCH may be repeated in given time units (transmission method 2). The repetition of the PDCCH in slot units may be referred to as PDCCH repetition with slot aggregation.

Which transmission method (also referred to as transmission type or transmission mode) 1 or 2 is to be applied may be defined in specifications or configured from a network (for example, a base station) to a terminal by higher layer signaling or the like.

Application of beam cycling in given symbol (or given slot) units may be supported. Information related to the unit of beam cycling (for example, the number of symbols) may be reported from the base station to the UE by higher layer signaling or may be defined in specifications.

For example, the unit of beam cycling may be determined with reference to the value (for example, µ) of a given subcarrier spacing. As an example, the unit of beam cycling may be the number of symbols obtained by 2^{(µ/µ3)}. µ is the subcarrier spacing at which the control resource set is transmitted, and µ3 (= 3) may correspond to a subcarrier spacing of 120 kHz.

At each subcarrier spacing, a given number (for example, the number of X symbols) of demodulation reference signals may be time-multiplexed (TDM) with the PDCCH. The demodulation reference signal may also be referred to as a demodulation reference signal (DMRS) for the PDCCH. Information related to the number of symbols to which the DMRS is allocated may be defined in specifications or may be reported from the base station to the terminal by higher layer signaling or the like.

The common number (for example, the same value) of symbols to which the DMRS is allocated in given time units (for example, slots) may be configured for a plurality of subcarrier spacings. Alternatively, the number of symbols to which the DMRS is allocated may be configured separately (for example, differently) for each subcarrier spacing.

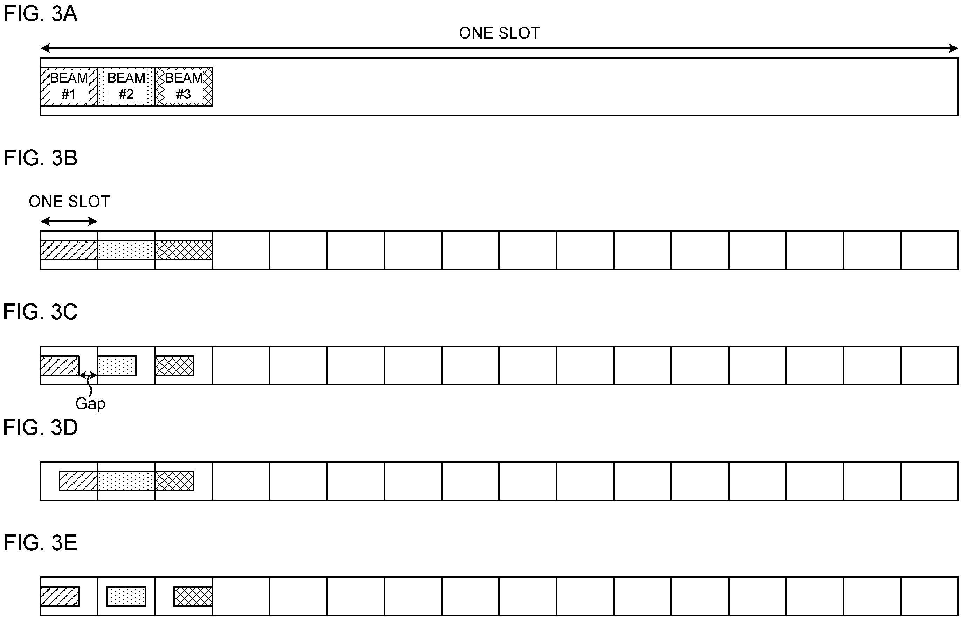

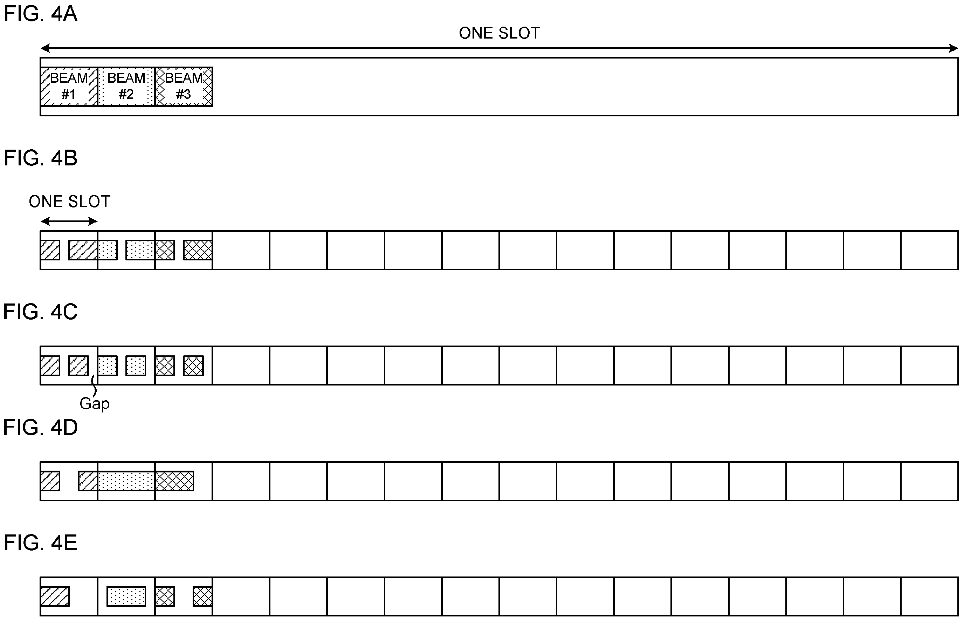

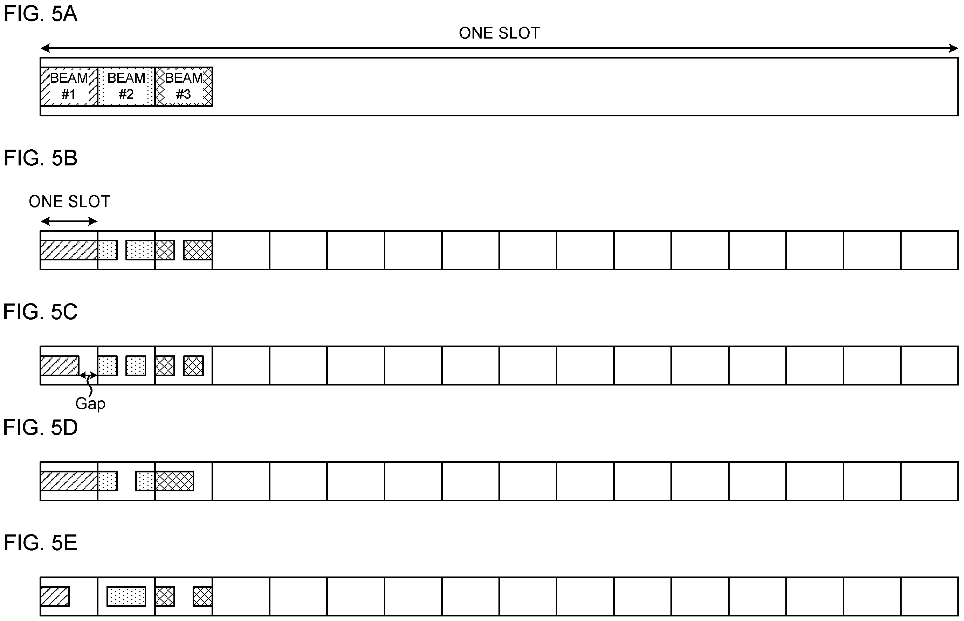

FIGS. 3A to 5E show an example of time domain allocation of the control resource set (or the PDCCH). FIG. 3 shows a case in which the resources allocated within one slot are consecutive. FIGS. 4A to 4E show a case in which the resources allocated within one slot are not consecutive (inconsecutive). FIGS. 5A to 5E show a case in which the resources allocated within the first slot are consecutive, whereas the resources allocated within the other slots are inconsecutive.

The figures show that beam cycling (for example, switching between beams #1 and #2 and #3) is applied in slot units. However, the time units in which the beam cycling is applied, the number, the beam indices for the beam cycling applied, and the like are not limited to the configuration shown in FIGS. 3A to 5E. The same beam may be applied in different slots.

In FIGS. 3A to 5E, FIG. 3A, FIG. 4A, and FIG. 5A show an example of allocation (up to 3 symbols) of the control resource set in a case where the subcarrier spacing is 120 kHz, and FIGS. 3B to 3E, FIGS. 4B to 4E, and FIGS. 5B to 5E show an example of allocation of the control resource set in a case where the subcarrier spacing is 1920 kHz. The figures show cases in which the control resource set with a subcarrier spacing of 1920 kHz is allocated in three slots. However, the number and positions of slots in which the control resource set can be allocated are not limited to the illustrated configuration.

FIG. 3B shows a case in which the same time domain resource allocation (TDRA) is applied among different slots and in which TDRAs are consecutive over a plurality of slots (or the TDRAs are consecutive at least among different slots).

FIG. 3C shows a case in which the same TDRA is applied among different slots and in which TDRAs are not consecutive over a plurality of slots (for example, gaps occur in the control resource set allocated to different slots). Gaps are provided in the control resource set (or between the PDCCH resources) over a plurality of slots to allow the time required for beam switching to be secured. A UL section can be configured in the slot.

FIG. 3D shows a case in which different TDRAs are applied among different slots and in which the TDRAs are consecutive over a plurality of slots. In this case, in the leading slot and the last slot to which the control resource set is allocated, some of the symbols can be allocated with the control resource set. This allows a UL section to be configured in the slot.

FIG. 3E shows a case in which different TDRAs are applied among different slots and in which the TDRAs are not consecutive over a plurality of slots (for example, gaps occur in the control resource set allocated to different slots). Gaps are provided in the control resource set (or between the PDCCH resources) over a plurality of slots to allow the time required for beam switching to be secured. The resource allocation region can be flexibly configured in each slot, allowing a DL section or a UL section to be flexibly configured.

FIGS. 4B to 4E show a case including a configuration in which the resources allocated within at least one of a plurality of slots in which the control resource set is allocated are not consecutive (inconsecutive). The figures show a case in which the same beam is applied to inconsecutive resources within one slot. However, no such limitation is intended. For example, different beams may be applied to inconsecutive resources within one slot.

FIG. 4B shows a case in which the same TDRA is applied among different slots and in which the TDRAs are consecutive (or cross) over at least different slots. The control resource set is inconsecutively configured within one slot (or gaps are provided) to allow the time required for beam switching to be secured when different beams are applied, for example. A UL section can be configured in the slot.

FIG. 4C shows a case in which the same TDRA is applied among different slots and in which TDRAs are not consecutive over a plurality of slots (for example, gaps occur in the control resource set allocated to different slots). Gaps are provided in the control resource set (or between the PDCCH resources) over a plurality of slots to allow the time required for beam switching to be secured. A UL section can be configured in the slot.

FIG. 4D shows a case in which different TDRAs are applied among different slots and in which the TDRAs are consecutive over a plurality of slots. In this case, in the leading slot and the last slot to which the control resource set is allocated, some of the symbols can be allocated with the control resource set. This allows a UL section to be configured in the slot.

FIG. 4E shows a case in which different TDRAs are applied among different slots and in which the TDRAs are not consecutive over a plurality of slots (for example, gaps occur in the control resource set allocated to different slots). Gaps are provided in the control resource set (or between the PDCCH resources) over a plurality of slots to allow the time required for beam switching to be secured. The resource allocation region can be flexibly configured in each slot, allowing a DL section or a UL section to be flexibly configured.

FIGS. 5B to 5E show a case including a configuration in which the resources allocated within at least one of a plurality of slots in which the control resource set is allocated are consecutive. The figures show a case in which the resources are consecutive at least in the leading slot in which the control resource set is allocated. However, no such limitation is intended. The figures show a case in which the same beam is applied to inconsecutive resources within one slot. However, no such limitation is intended. For example, different beams may be applied to inconsecutive resources within one slot.

FIG. 5B shows a case in which the same TDRA is applied among different slots (for example, the second and third slots) and in which the TDRAs are consecutive at least between different slots (TDRAs cross the boundary). The control resource set is inconsecutively configured within one slot (or gaps are provided) to allow the time required for beam switching to be secured when different beams are applied, for example. A UL section can be configured in the slot.

FIG. 5C shows a case in which the same TDRA is applied among different slots (for example, the second and third slots) and in which TDRAs are not consecutive over a plurality of slots (for example, gaps occur in the control resource set allocated to different slots). Gaps are provided in the control resource set (or between the PDCCH resources) over a plurality of slots to allow the time required for beam switching to be secured. A UL section can be configured in the slot.

FIG. 5D shows a case in which different TDRAs are applied among different slots and in which the TDRAs are consecutive over a plurality of slots. In this case, the configuration can be such that the control resource set is allocated to some of the symbols in at least some of the slots. This allows a UL section to be configured in the slot.

FIG. 5E shows a case in which different TDRAs are applied among different slots and in which the TDRAs are not consecutive over a plurality of slots (for example, gaps occur in the control resource set allocated to different slots). Gaps are provided in the control resource set (or between the PDCCH resources) over a plurality of slots to allow the time required for beam switching to be secured. The resource allocation region can be flexibly configured in each slot, allowing a DL section or a UL section to be flexibly configured.

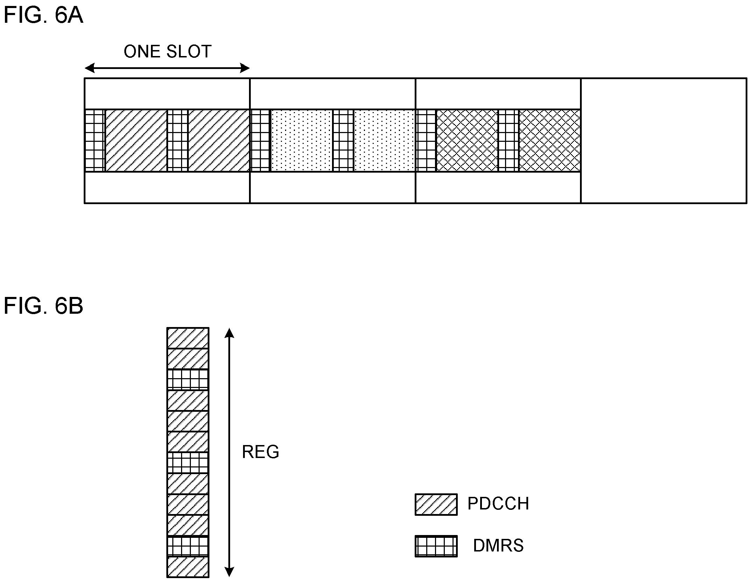

In a case where the subcarrier spacing is greater than a given value (for example, 120 kHz), the demodulation reference signal (DMRS) and the PDCCH (or DCI) may be allocated separately from each other in the time direction (for example, time multiplexing) (see FIG. 6A). On the other hand, in a case where the subcarrier spacing is equal to or less than the given value (for example, 120 kHz), similarly to Rel. 15, the DMRS and the PDCCH (or DCI) may be allocated separately from each other in the frequency direction (for example, frequency multiplexing) (see FIG. 6B).

The number of symbols (for example, X) for the DMRS to be time-multiplexed with the PDCCH (or DCI) may be defined in specifications or may be reported from the base station to the UE by higher layer signaling or the like. For each slot or for every given number of slots, at least the DMRS allocated at the leading position (also referred to as, for example, the front-loaded DMRS) may be configured. FIG. 6A shows a case where at least one DMRS is configured for the leading symbol of each slot.

One common DMRS may be used in a plurality of slots. The number of symbols for the DMRS configured may be increased based on the duration (for example, the number of symbols) to which the control resource set is allocated, or the like. The DMRSs added (additional DMRSs) may be configured for each slot or for every given number of slots. Information related to the DMRSs added (for example, the number and positions of DMRSs added and the like) may be reported from the base station to the UE using at least one of higher layer signaling and DCI.

### <Frequency Domain>

Frequency domain resources in the control resource set may be designed based on control channel elements (CCE) in given units or an aggregation level (AL). For example, at least one of CCE and AL may be configured as is the case with Rel. 15.

For example, one CCE may include a given number of (for example, six) resource blocks (RB). In other words, the RBs constituting one CCE may have a granularity of 6. The ALs supported may be 1, 2, 4, 8, and 16 as is the case with Rel. 15. For example, 1CCE, 2CCE, 4CCE, 8CCE, and 16CCE may respectively correspond to 1AL, 2AL, 4AL, 8AL, and 16AL.

For example, for each subcarrier spacing (for example, 15 kHz, 30 kHz, 60 kHz, 120 kHz,240 kHz, 480 kHz, 960 kHz, 1920 kHz, and 3840 kHz), the common value of at least one of the number of RBs constituting the CCE and the AL corresponding to the CCE may be configured.

Alternatively, at least one of the number of RBs constituting the CCE and the AL corresponding to the CCE at given subcarrier spacings (for example, 240 kHz or more) may be configured separately at the other subcarrier spacings (for example, 120 kHz or less).

For example, the number of RBs constituting the CCE at a given subcarrier spacing may be configured differently from (for example, smaller than) the number of RBs constituting the CCE at another subcarrier spacing. For example, the number of RBs constituting 1CCE at a given subcarrier spacing may be less than 6 (for example, 2 or 3). By reducing the number of RBs constituting the CCE in a case where the subcarrier spacing is increased, adverse effects on usage can be reduced, allowing the configuration of the terminal to be simplified.

Alternatively, the AL supported at a given subcarrier spacing may be configured differently from (for example, higher than) the AL supported at another subcarrier spacing. For example, the ALs supported at a given subcarrier spacing may be 6, 10, 12, 18, 24, and 32. By increasing the ALs supported in a case where the subcarrier spacing is increased, degradation of communication quality can be suppressed. Of course, the ALs that can be supported are not limited to these. AL1 may also be supported at the given subcarrier spacing.

The types of mapping between CCE and REG (cce-REG-Mapping) include interleave (or interleaving) and non-interleave (or non-interleaving) .

In a case where interleaving is applied, two REGs, three REGs, or six REGs may be grouped to form an REG bundle to allow interleaving to be performed in REG bundle units. Interleaving may be performed within the CORESET. In a case where interleaving is not applied, six REGs constituting one CCE form an REG bundle, and the six REGs are consecutively allocated in the frequency direction and/or time direction. In this case, one or more CCEs constituting one PDCCH candidate may also be consecutively allocated in the frequency direction.

The applicable type of mapping between CCE and REG may be separately (for example, differently) configured for each subcarrier spacing. For example, in a case where the subcarrier spacing is equal to or less than a given value (for example, 120 kHz), as the type of mapping between CCE and REG, both interleave and non-interleave are supported. Which type is to be used may be reported from the base station to the UE by higher layer signaling or the like.

In a case where the subcarrier spacing is greater than the given value (for example, 120 kHz), as the type of mapping between CCE and REG, only one of the types may be supported. The one of the types may be non-interleave, for example. Thus, for single carrier transmission (for example, in a case where DFT-s-OFDM is applied), an increase in PAPR can be avoided.

In a case where the subcarrier spacing is greater than the given value, frequency hopping for the control resource set (or the PDCCH) may be supported. For example, at least one of intra-slot frequency hopping (intro-slot FH) and inter-slot frequency hopping (inter-slot FH) may be supported. The type of frequency hopping supported may be defined in specifications or may be reported from the base station to the UE by higher layer signaling or the like. Different types of frequency hopping may be configured for the respective subcarrier spacings.

For example, in a case where the frequency hopping is supported, whether frequency hopping is configured or whether frequency hopping is enabled/disabled may be reported from the base station to the UE by higher layer signaling or the like.

A plurality of types of frequency hopping (for example, intra-slot FH and inter-slot FH) may not be configured simultaneously. In a case where two or more types of frequency hopping are supported, the applied type of frequency hopping may be reported from the base station to the UE by higher layer signaling or the like.

In intra-slot FH, slot boundaries may be determined based on the number of symbols in which the PDCCH is allocated. For example, in a case where the number of symbols used for the PDCCH is N, a ceiling function or a floor function may be applied to N/2 (ceil/floor(N/2)) to determine the slot boundaries.

An offset between frequency domains in frequency hopping (for example, the offset between first hopping and second hopping) may be reported from the base station to the UE by higher layer signaling or the like. Alternatively, the offset may be defined in specifications according to the size of the bandwidth.

### <Spatial Domain>

For spatial domain resources in the control resource set, a plurality of (for example, more than one) TCI states may be configured. For example, the network may report, to the UE, information related to the TCI state (for example, the number of TCI states and so on) using higher layer parameters (for example, tci-StatesPDCCH-ToAddList and so on).

In a case where the PDCCH is allocated in different slots (or the PDCCH is transmitted by utilizing a plurality of slots) (for example, FIGS. 3A to 5E), the same TCI state may be applied to the PDCCH. Note that the slots may be interpreted as mini-slots, half-slots, or a given number of symbols.

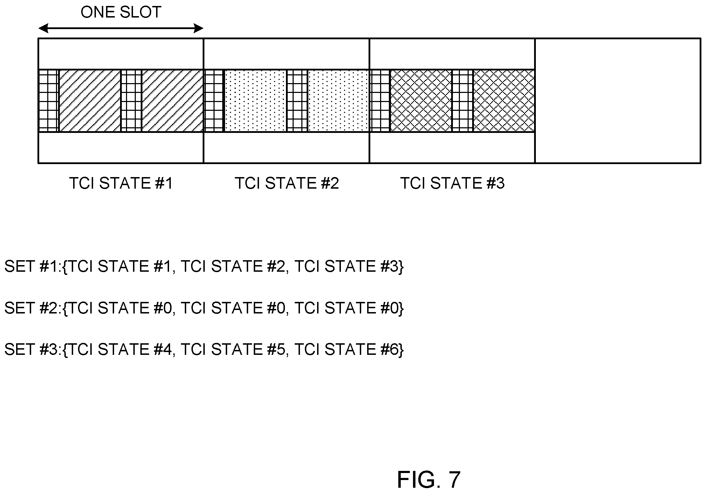

Alternatively, in a case where the PDCCH is allocated in different slots (or the PDCCH is transmitted by using a plurality of slots) (for example, FIGS. 3A to 5E), different TCI states may be applied to the PDCCHs (see FIG. 7). FIG. 7 shows a case in which different TCI states (in this case, TCI states #1 to #3) are applied to the PDCCHs transmitted in slots (or mini-slots, half slots, or a given number of symbols).

In a case where the number of TCI states (or TCI state sequences or TCI state sets) configured by higher layer signaling is greater than that on transmission occasions for the PDCCH, a given TCI state may be activated (or updated) by using MAC CEs.

For example, it is assumed that three sets of TCI states (three TCI state set) are configured by higher layer signaling (see FIG. 7). Each set may include TCI states with the same index or include TCI states with different indices. In this case, the base station may specify a given TCI state set by using MAC CEs. FIG. 7 shows that TCI state set #1 is specified.

Alternatively, in a case where the base station recognizes an optimum beam (or TCI state) for each slot (or mini-slot, half slot, or the given number of symbols), the optimum beam may be applied to all the slots. In such a case, the UE may assume that one TCI state is reported (or activated or configured) for a repetition of all PDCCHs.

In a case where the base station uses beam cycling to transmit the PDCCH, a reception beam (or referred to as a reception panel or a logical panel) for the UE used for reception of each PDCCH may be any one of options 1 to 3 described below.

Option 1: the same reception beam is applied
Option 2: different reception beams are applied
Option 3: a beam autonomously determined by the UE is applied

In options 1 and 2, information related to the reception beam applied by the UE may be specified by using at least one of higher layer signaling and MAC CEs. In option 3, the reception beam is selected on the UE side (UE implemented).

Note that for the reception beam (or reception panel) for the UE, configuration, activation, or reporting of a panel ID may be performed in addition to configuration, activation, or reporting of the TCI state. Alternatively, for the reception beam (or reception panel) for the UE, configuration, activation, or reporting of the panel ID may be performed instead of configuration, activation, or reporting of the TCI state.

For example, in a case where a given panel ID is configured, activated, or reported, the UE may be required to receive DL transmission (for example, at least one of the PDCCH, PDSCH, CSI-RS, and PTRS (Phase Tracking Reference Signal)) by using a panel corresponding to the panel ID. Note that the panel ID may be interpreted as an antenna port group, a reference signal group (RS group), a reception entity, a reception beam group (Rx beam group), or a reception beam (Rx beam). The panel ID need not necessarily correspond to the ID of a physical panel and may be a logical panel ID.

### (Second Aspect)

In a second aspect, a modulation scheme applied to a DL channel (for example, a PDCCH) will be described. Note that the modulation scheme will hereinafter be described that is applied to the DL channel in a case where the subcarrier spacing is greater than a given value (for example, 120 kHz) but that the modulation scheme may be applied to a subcarrier spacing equal to or less than the given value.

In modulation of the PDCCH, a plurality of modulation orders may be supported. For example, in the modulation of the PDCCH, at least one of BPSK, pi/2QPSK, and pi/2BPSK may be supported in addition to QPSK.

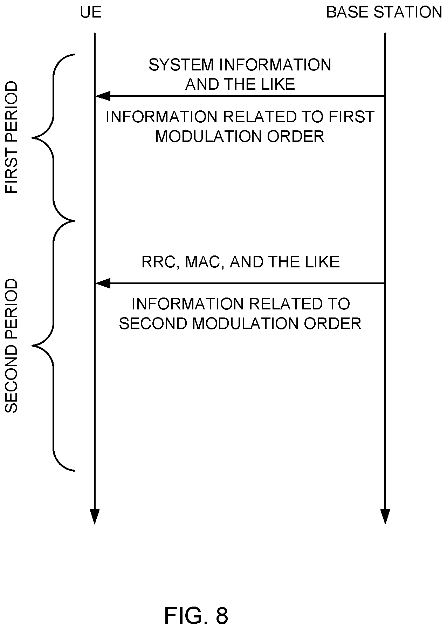

Determination (or reporting) of the modulation order (or modulation scheme) to be used for PDCCH transmission may be controlled by different methods. The determination method for the modulation order may be configured separately according to the period of communication. For example, a first method may be used to determine the modulation order applied to the PDCCH in the first period, and a second method may be used to determine the modulation order applied to the PDCCH in the second period (see FIG. 8).

Even for the same period (for example, the second period), the determination method for the modulation order may be configured separately based on a type or kind of the PDCCH (or DCI) .

The first period may precede configuration (for example, provision) of higher layer signaling (for example, dedicated RRC signaling), and the second period may succeed the configuration of the higher layer signaling. The modulation order used for PDCCH transmission during the first period may be referred to as a default modulation order, a first modulation order, and so on. Of course, the first period and the second period are not limited to the periods described above. In addition to the first period and the second period, a third period may be provided.

### <First Period>

For the first period, the modulation order used for PDCCH transmission may be predefined in specifications. For example, the modulation order used for PDCCH transmission during the first period may be QPSK. In a case where the modulation order applied is predefined in specifications, the reporting, to the UE, of information regarding the modulation order can be omitted.

Alternatively, the modulation order used for PDCCH transmission may be reported to the UE by using system information (see FIG. 8). The system information may be SIBx (for example, SIB) or MIB. In a case where the modulation order applied is reported from the base station to the UE, the reporting, to the UE, of information regarding the modulation order applied during the first period can be omitted.

### <Second Period>

For the second period, the modulation order used for PDCCH transmission may be determined by using at least one of reporting methods 1 to 4 described below.

### [Reporting Method 1]

Information related to the modulation order may be reported by using higher layer signaling (for example, RRC signaling). In this case, the UE may determine at least one modulation order based on the information included in the higher layer signaling reported from the network (for example, the base station).

### [Reporting Method 2]

The modulation order used for PDCCH transmission may be determined separately based on the type or kind of the PDCCH (or DCI). For example, a given method may be used to transmit information related to the modulation order applied to the PDCCH transmission transmitting UE-specific DCI, and another method may be used to transmit information related to the modulation order applied to the PDCCH transmission transmitting common DCI (or group common DCI).

The given method may be reporting using higher layer signaling. The UE may determine the modulation order applied to the PDCCH for the UE-specific DCI based on the information included in the higher layer signaling reported from the network.

Such another method may be reporting using higher layer signaling or system information. The UE may determine the modulation order applied to the PDCCH for common DCI based on the information included in at least one of higher layer signaling and system information reported from the base station. Note that in a case where higher layer signaling is used to report the information regarding the modulation order corresponding to the common DCI, this information may be reported separately from the information regarding the modulation order corresponding to the UE-specific DCI (for example, by using a different RRC parameter).

Alternatively, the modulation order applied to the PDCCH transmission transmitting the common DCI (or group common DCI) may be predefined in specifications. In this case, the UE determines the modulation order corresponding to the UE-specific DCI based on the information from the base station, and the modulation order corresponding to the common DCI based on the contents defined in specifications.

Thus, the modulation order applied to the PDCCH is determined separately based on the type or kind of the PDCCH (or DCI), enabling the modulation order to be flexibly configured according to the type of the PDCCH.

### [Reporting Method 3]

Information related to the modulation order may be determined by using higher layer signaling (for example, RRC signaling) and MAC control information (for example, MAC CEs). For example, a plurality of candidates for the modulation order (or modulation order set) applied to the PDCCH transmission may be configured by higher layer signaling, and a given modulation order may be specified by using MAC CEs.

The UE may determine one modulation order based on the information related to the plurality of modulation order candidates included in the higher layer signaling reported from the base station and the information included in the MAC CEs. In this case, as the modulation order applied to the PDCCH scheduling the MAC CEs the modulation order recognized by the UE in advance may be used. For example, the modulation order may be the latest modulation order specified by the MAC CEs or a predefined modulation order (for example, a default modulation order).

Thus, the information related to the modulation order is reported by using the MAC CEs, enabling the modulation order to be flexibly changed for configuration.

### [Reporting Method 4]

Information related to the modulation order may be reported by using higher layer signaling (for example, RRC signaling) and another information (side information). For example, a plurality of candidates for the modulation order (or modulation order set) applied to the PDCCH transmission may be configured by higher layer signaling, and a given modulation order may be determined based on another information.

Such another information may be at least one of a DCI format, a search space type, the index of the control resource set, an aggregation level, and a type of RNTI. For example, different DCI formats (or different search space types, different indices of the control resource set, different aggregation levels, and different types of RNTI) may be associated with the respective plurality of candidates for the modulation order configured by higher layer signaling.

The UE may determine one modulation order based on the information related to the plurality of modulation order candidates included in the higher layer signaling reported from the base station and such another information applied to the PDCCH transmission.

Thus, the modulation order is determined based on such another information, enabling the modulation order to be flexibly changed for configuration.

### (Third Aspect)

In a third aspect, an allocation method for the DL channel (for example, the PDCCH) will be described. Note that allocation may be interpreted as mapping or multiplexing. Multiplexing in the description below may be at least one of multiplexing between different UEs and multiplexing between different antenna ports.

The modulation scheme will hereinafter be described that is applied to the DL channel in a case where the subcarrier spacing is greater than a given value (for example, 120 kHz) but that the modulation scheme may be applied to a subcarrier spacing equal to or less than the given value.

At least one of comb, a cyclic shift, a time domain OCC, and a frequency domain OCC may be applied to the allocation of the DL channel. The comb may be referred to as a CDM group.

At least one of the comb, cyclic shift, time domain OCC, and frequency domain OCC may be applied exclusively to the DMRS (for example, DMRS for demodulating a PDCCH) used for demodulation of the DL channel. In other words, the configuration may be such that the comb, cyclic shift, time domain OCC, and frequency domain OCC are not applied to the PDCCH (or DCI).

Alternatively, the configuration may be such that at least one of the comb, cyclic shift, time domain OCC, and frequency domain OCC are applied to both the DMRS for demodulation for the PDCCH and the PDCCH (or DCI).

Information related to at least one of the comb, cyclic shift, time domain OCC, and frequency domain OCC (for example, a number applied and the like) may be reported from the base station to the UE by higher layer signaling. The same DMRS configuration may be configured for different slots or separate DMRS configurations may be configured for the different slots.

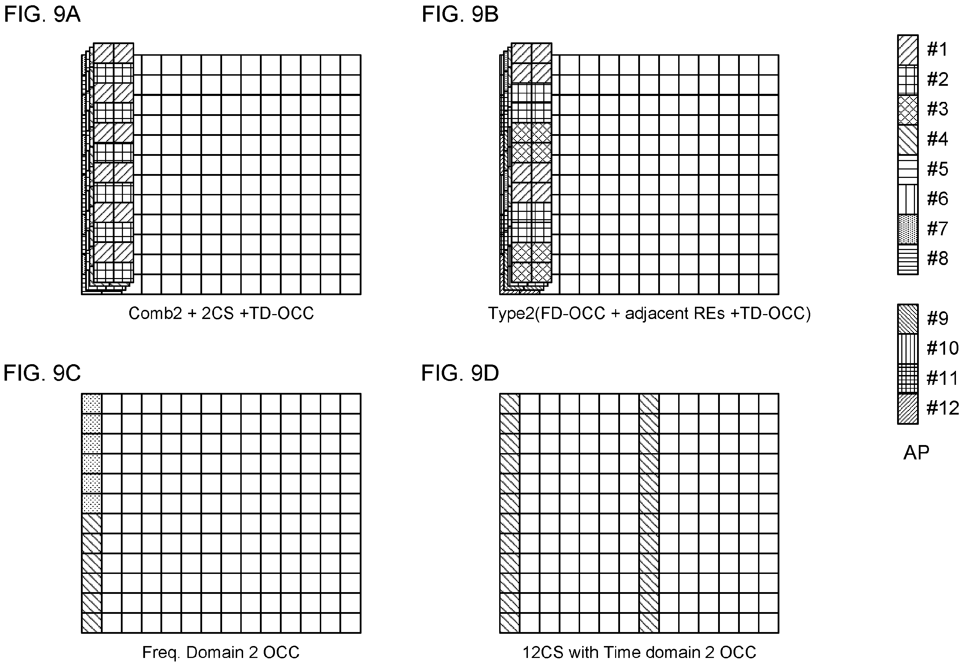

FIG. 9A shows a case in which two combs and two cyclic shifts, and a time domain OCC are applied. In this case, the DMRS is allocated in two adjacent symbols, and thus an orthogonal code in the time direction (for time division) (TD-OCC) may be used, in addition to Comb and cyclic shift (CS). For example, up to eight APs can be supported by using two types of Combs, two types of CSs, and a TD-OCC ({1, 1} and {1-1}). Note that in this case, with the TD-OCC ({1, 1} and {1-1}) not used, up to four APs may be supported. Alternatively, instead of the TD-OCC, TDM may be applied.

FIG. 9B shows a case where the frequency domain OCC and time domain OCC are applied in units of adjacent REs. In this case, the DMRS is allocated in two adjacent symbols, and thus up to 12 APs can be supported by applying the orthogonal code to two resource elements (REs) adjacent in the frequency direction (2-FD-OCC) and applying the TD-OCC ({1, 1} and {1-1}) to two REs adjacent in the time direction. Note that in this case, with the TD-OCC ({1, 1} and {1-1}) not used, up to six APs may be supported. Alternatively, instead of the TD-OCC, TDM may be applied.

FIG. 9C shows that two OCCs are applied in the frequency direction (two frequency domain OCCs). FIG. 9D shows a case in which 12 cyclic shifts and two OCCs in the time direction (two time domain OCCs) are applied.

For example, multiplexing between the PDCCHs (for example, multiplexing between the PDCCHs in different UEs) may be performed based on comb (or different DCM groups). Furthermore, in a case where a plurality of MIMO layers are supported for the PDCCH, at least one of the cyclic shift, time domain OCC, and frequency domain OCC may be applied to different layers of the PDCCH (or different antenna ports). This appropriately enables multiplexing between UEs and multiplexing between antenna ports.

In a case where the subcarrier spacing is greater than a given value (for example, 120 kHz), application of hopping of a DMRS sequence for PDCCH demodulation may be supported. The DMRS sequence hopping may be controlled based on at least one of the symbol level, slot level, and mini-slot level (or sub-slot level).

For example, in a case where sequence hopping on the symbol level is applied and the time domain OCC is applied to a plurality of symbols for the DMRS, the same DMRS sequence may be applied to a plurality of DMRS symbols within one time domain OCC. This enables orthogonality of the time domain OCC to be maintained.

### <Allocation of Control Channel and Data Channel>

At least one of frequency multiplexing (for example, FDM) and time multiplexing (for example, TDM) may be applied to allocation of a control channel (for example, the PDCCH) and a data channel (for example, the PDSCH).

### <Frequency Multiplexing>

In a case where the UE supports frequency multiplexing between the PDCCH and the PDSCH, control may be performed such that the PDCCH is allocated to a first allocation region (or resource), whereas the PDSCH is allocated to a second allocation region. For example, the first allocation region may be an edge region of a cell, CC, or BWP, whereas the second allocation region may be an inner side region of the cell, CC, or BWP.

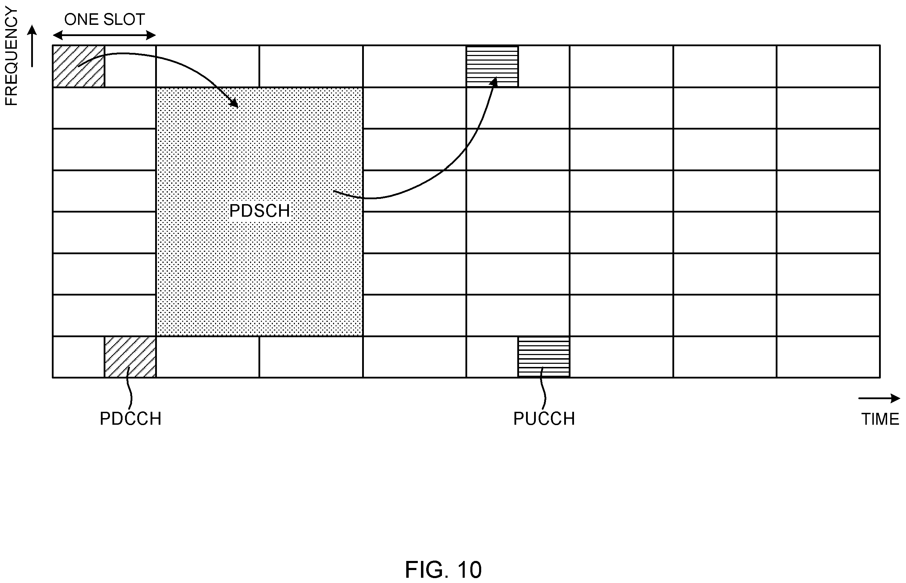

For example, the PDSCH may be allocated such that the PDSCH is sandwiched between the PDCCHs in the frequency direction (see FIG. 10). This enables the PDSCH to be transmitted by using consecutive resources.

### [Time Multiplexing]

In a case where the UE supports the time multiplexing between the PDCCH and the PDSCH, an interval between the PDCCH and the PDSCH may be controlled based on UE capability. A time gap may be provided between the PDCCH and the PDSCH. Provision of the time gap allows suppression of an increase in processing load on the UE in PDSCH buffering.

### <Frequency Multiplexing/Time Multiplexing>

Both time multiplexing and frequency multiplexing may be applied between the PDCCH and the PDSCH. Thus, the network (for example, the base station) can flexibly control allocation of the PDCCH and the PDSCH according to the UE capability, communication conditions required, communication environments, and so on.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

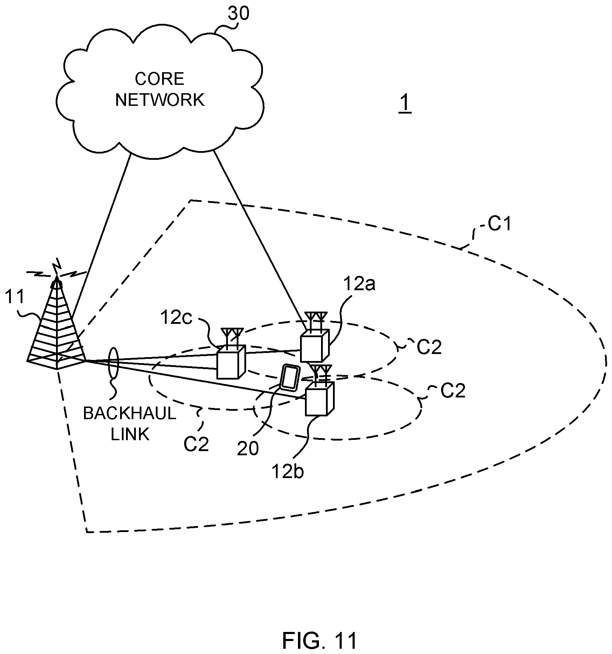

FIG. 11 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6GHz or less (sub-6GHz), and FR2 may be a frequency band which is higher than 24GHz (above-24GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are transmitted on the PDSCH. User data, higher layer control information and so on may be transmitted on the PUSCH. The Master Information Blocks (MIBs) may be transmitted on the PBCH.

Lower layer control information may be transmitted on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be transmitted by means of the PUCCH. By means of the PRACH, random access preambles for establishing connections with cells may be transmitted.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be transmitted. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be transmitted as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be transmitted as an uplink reference signal (UL-RS). Note that DMRS may be referred to as a "user terminal specific reference signal (UE-specific Reference Signal)."

### (Base Station)

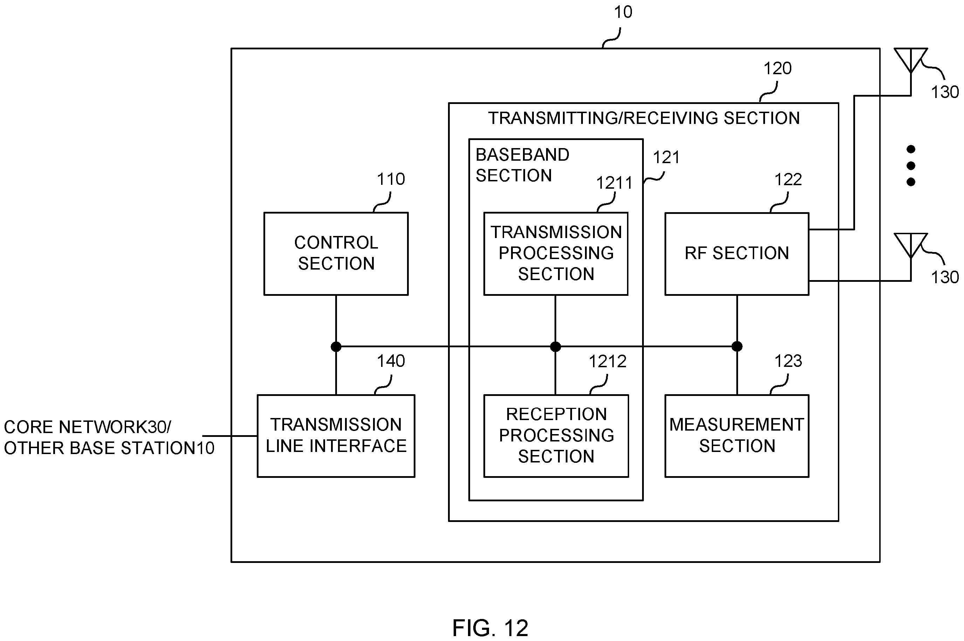

FIG. 12 is a diagram to show an example of a structure of the base station according to one embodiment. The base station 10 includes a control section 110, a transmitting/receiving section 120, transmitting/receiving antennas 130 and a transmission line interface 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmission beam and a reception beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

Note that the transmitting/receiving section 120 may transmit a control resource set for which the maximum value of at least one of the number of symbols for allocation and the number of slots for allocation is changed based on the subcarrier spacing.

The transmitting/receiving section 120 may transmit at least one of information related to the first modulation order applied in the first period and information related to the second modulation order applied in the second period.

The transmitting/receiving section 120 may transmit, in a frequency band higher than a given frequency, a demodulation reference signal for a downlink channel to which at least one of the comb, cyclic shift, and OCC is applied.

The control section 110 controls transmission of the downlink channel (for example, the PDCCH, PDSCH, or the like) in the frequency band higher than the given frequency.

### (User Terminal)

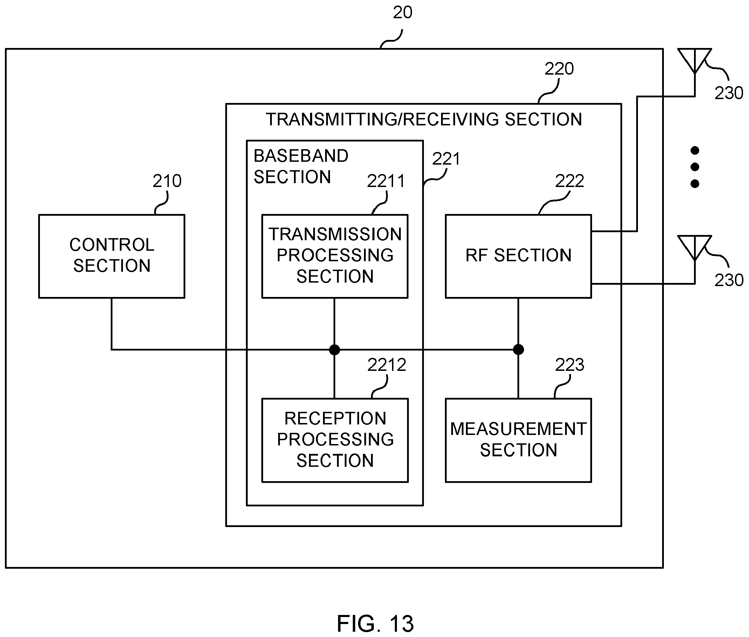

FIG. 13 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmission beam and a reception beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (the RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (the RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (the measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the transmitting/receiving section 220 may receive a control resource set for which the maximum value of at least one of the number of symbols for allocation and the number of slots for allocation is changed based on the subcarrier spacing and the frequency band.

The transmitting/receiving section 220 may transmit at least one of information related to the first modulation order applied in the first period and information related to the second modulation order applied in the second period. The transmitting/receiving section 220 may receive a downlink channel based on at least one of the received information related to the first modulation order and the received information related to the second modulation order.

The transmitting/receiving section 220 may receive, in a frequency band higher than a given frequency, a demodulation reference signal for a downlink channel to which at least one of the comb-like subcarrier allocation (comb), cyclic shift, and orthogonal cover code (OCC) is applied.

The control section 210 controls reception of the control resource set. In a case where the subcarrier spacing is equal to or less than a given value, the number of symbols in which the control resource set is allocated has the same maximum value, and in a case where the subcarrier spacing is greater than the given value, a plurality of maximum values for the number of symbols in which the control resource set is allocated may be configured according to the subcarrier spacing. In a case where the control resource set is allocated in a plurality of symbols, the allocation of the control resource set may be configured separately for each slot. The number of resource blocks constituting the control channel element in a case where the subcarrier spacing is equal to or less than the given value may be different from the number of resource blocks constituting the control channel element in a case where the subcarrier spacing is greater than the given value. In a case where the control resource set is allocated in a plurality of symbols, a transmission configuration indicator (TCI) applied to the transmission of the control resource set may be configured separately for each slot.

The control section 210 may determine the first modulation order applied in the first period and the second modulation order applied in the second period based on different pieces of information. The control section 210 may determine the first modulation order based on information defined in specifications or information reported in the system information. The control section 210 may determine the second modulation order based on information reported by higher layer signaling. The control section 210 may determine a plurality of modulation orders as the second modulation order depending on the channel type applied. The control section 210 may determine the second modulation order based on higher layer signaling reporting a plurality of modulation order candidates, MAC control information specifying a particular modulation order candidate, or another parameter.

The control section 210 may control reception of the downlink channel based on a demodulation reference signal and information reported by higher layer signaling. At least one of comb, a cyclic shift, and an OCC may be applied to the downlink channel. At least one of the comb, cyclic shift, and OCC may be applied to the demodulation reference signal. A sequence of demodulation reference signals may be hopped at each given time unit. The downlink channel may be a downlink control channel, the downlink control channel may be allocated in a first region of a partial bandwidth, and a downlink shared channel scheduled by the downlink control channel may be allocated on a center side of the partial bandwidth with respect to the first region.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

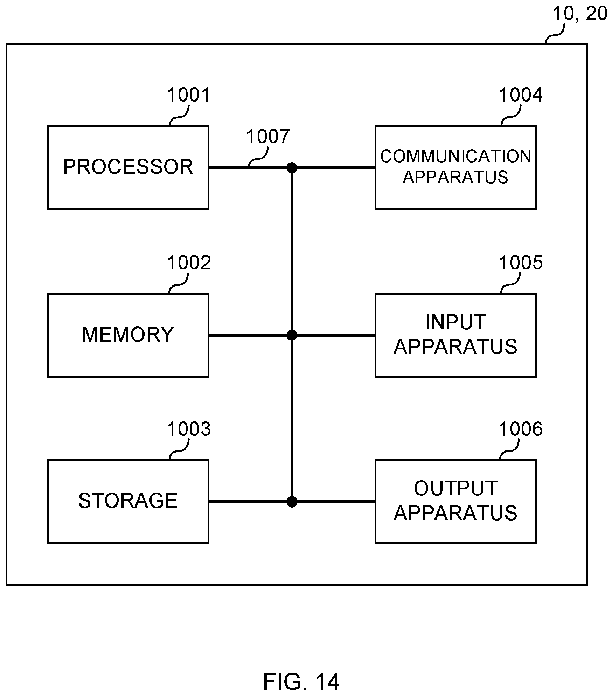

For example, a base station, a user terminal, and so on according to one embodiment of the present disclosure may function as a computer that executes the processes of the radio communication method of the present disclosure. FIG. 14 is a diagram to show an example of a hardware structure of the base station and the user terminal according to one embodiment. Physically, the above-described base station 10 and user terminal 20 may each be formed as computer an apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmission power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "partial bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a given signal/channel outside active BWPs. Note that a "cell," a "carrier," and so on in the present disclosure may be interpreted as a "BWP."

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be indicated by given indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmission power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives a control resource set for which a maximum value of at least one of a number of symbols for allocation and a number of slots for allocation is changed based on at least one of a subcarrier spacing and a frequency band; and
a control section that controls reception of the control resource set.

2. The terminal according to claim 1, wherein
in a case where the subcarrier spacing is equal to or less than a given value, the number of symbols in which the control resource set is allocated has an identical maximum value, and in a case where the subcarrier spacing is greater than the given value, a plurality of maximum values for the number of symbols in which the control resource set is allocated are configured according to the subcarrier spacing.

3. The terminal according to claim 1 or 2, wherein
in a case where the control resource set is allocated in a plurality of symbols, allocation of the control resource set is configured separately for each slot.

4. The terminal according to any one of claims 1 to 3, wherein
a number of resource blocks constituting a control channel element in a case where the subcarrier spacing is equal to or less than the given value is different from a number of resource blocks constituting the control channel element in a case where the subcarrier spacing is greater than the given value.

5. The terminal according to any one of claims 1 to 4, wherein in a case where the control resource set is allocated in a plurality of symbols, a transmission configuration indicator (TCI) applied to transmission of the control resource set is configured separately for each slot.

6. A radio communication method comprising:
receiving a control resource set for which a maximum value of at least one of a number of symbols for allocation and a number of slots for allocation is changed based on at least one of a subcarrier spacing and a frequency band; and
controlling reception of the control resource set.
